(19) Europäisches Patentamt / European Patent Office / Office européen des brevets

(11) **EP 2 253 970 B1**

(12) **FASCICULE DE BREVET EUROPEEN**

(45) Date de publication et mention
de la délivrance du brevet:
**22.01.2014 Bulletin 2014/04**

(51) Int Cl.:
***G01V 1/30*** (2006.01)

(21) Numéro de dépôt: **10290231.9**

(22) Date de dépôt: **30.04.2010**

(54) **Méthode pour imager une zone cible du sous-sol à partir de données de type walkaway**

Methode zur Visualisierungung einer Zielzone im Untergrund auf der Grundlage von Daten vom Typ Walkaway

Method for imaging a target area of the subsoil using walkaway data

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **20.05.2009 FR 0902531**

(43) Date de publication de la demande:
**24.11.2010 Bulletin 2010/47**

(73) Titulaire: **IFP Energies nouvelles**
**92852 Rueil-Malmaison Cedex (FR)**

(72) Inventeurs:
• **Delprat-Jannaud, Florence**
**92150 Suresnes (FR)**
• **Lailly, Patrick**
**64000 Pau (FR)**
• **Metivier, Ludovic**
**75012 Paris (FR)**

(56) Documents cités:
**EP-A- 0 909 961     WO-A-2004/031805**
**FR-A- 2 843 202**

• **DELPRAT-JANNAUD,F., LAILLY, P.: "A fundamental limitation for the reconstruction of imepance profiles from seismic data" GEOPHYSICS, vol. 70, no. 1, février 2005 (2005-02), pages R1-R14, XP002563120**
• **MACE, D., LAILLY, P.: "Solution of the one-dimensional inverse problem" GEOPHYSICAL PROSPECTING, vol. 34, 1986, pages 1002-1021, XP002563121**
• **MÉTIVIER ET AL: "2D nonlinear inversion of walkaway data" SEG INTERNATIONAL EXPOSITION AND ANNUAL MEETING,, 25 octobre 2009 (2009-10-25), XP002563122**

**Description**

La présente invention concerne le domaine de l'exploration du sous-sol à partir de données sismiques.

L'invention concerne notamment un traitement de données sismiques, permettant de fournir une image haute résolution du sous-sol. Une telle image est utilisée dans le domaine de l'exploration et la production pétrolière, ou le domaine de la surveillance de sites géologiques de stockage de $CO_2$.

**État de la technique**

Dans l'industrie pétrolière et pour la surveillance des sites de stockage de $CO_2$, il est très important de disposer d'images précises du sous-sol. La précision est définie en terme de résolution. Plus la résolution est haute, plus l'image contient d'informations sur la structure, voire la composition, du sous-sol. On recherche donc, dans ces domaines, à construire des images « haute résolution » du sous-sol, qu'il soit considéré comme statique (cas de l'exploration pétrolière) ou dynamique (cas du monitoring ou de la surveillance des réservoirs souterrains).

Pour établir une image du sous-sol, on réalise des mesures au sein de celui-ci. Deux grands types de mesures sont classiquement utilisés : des mesures au sein de puits forés à travers la formation, et des campagnes sismiques. Les premières permettent de parfaitement définir les propriétés du sous-sol, soit par des carottages, soit par des diagraphies (mesures de différentes propriétés du sous-sol en continue le long du puits) puis interprétations de ces diagraphies. L'information est précise, mais très localisée autours du puits. En revanche, les données sismiques jouent un rôle privilégié en imageant un grand volume du sous-sol. Mais l'information est moins précise, la résolution moins bonne.

Cependant, de nombreuses techniques ont été développées pour améliorer la précision de l'information issue des données sismiques. En particulier, les méthodes sismiques d'imagerie quantitative, qui visent à estimer la distribution de certains paramètres dans le sous-sol, tels que l'impédance acoustique ou des paramètres liés à l'impédance, apparaissent comme une avancée significative par rapport à l'obtention d'une image sismique conventionnelle. Bien entendu la qualité du résultat fourni par ces méthodes est d'autant plus grande que la résolution de l'image issue directement des données sismiques est haute.

Entre ces deux grands types de mesures, il existe des méthodes d'acquisition de données sismiques de puits. Il s'agit d'émettre des ondes sismiques dans le sous-sol, et d'enregistrer la réponse (réflexions notamment) du sous-sol au moyen de récepteurs placés dans un puits.

Parmi ces techniques de sismiques de puits, on connaît la méthode d'acquisitions de type « ballade sismique » plus connu sous le nom de "walkaway". Cette technique est décrite par exemple dans :

Mari, J.L., Glangeaud F., Coppens F., 1997, "Traitement du signal pour géologues et géophysisciens", editions Technip et

DELPRAT-JANNAUD, F, LALLY, P., 2005, "A fundamental limitation for the reconstruction of of impedance profiles from seismic data".

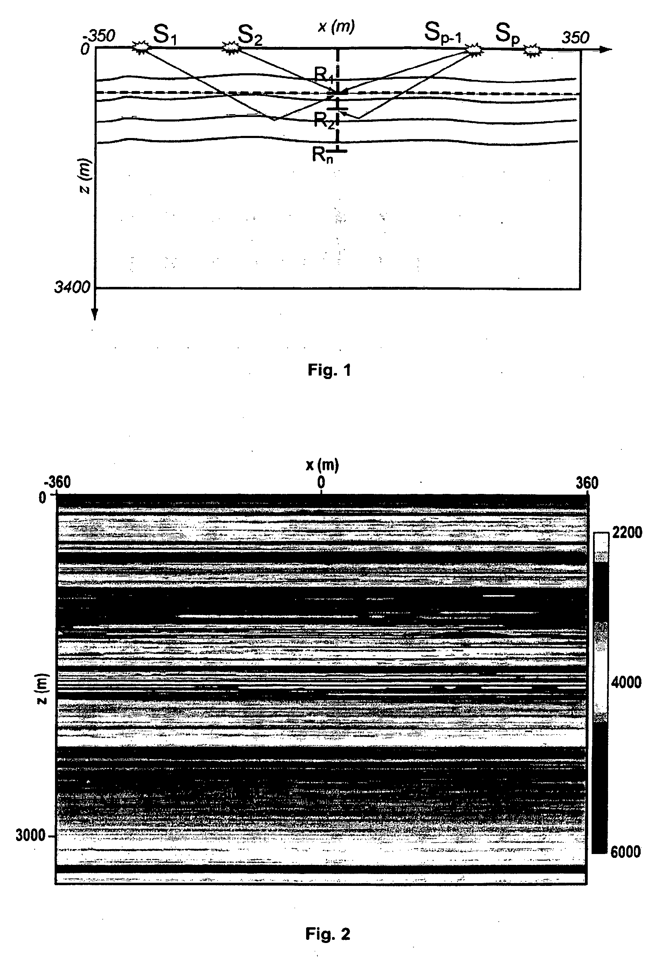

Comme l'illustre la figure 1, un « walkaway » consiste à réaliser une acquisition de données sismiques en disposant des sources sismiques ($S_1$, $S_2$, ..., $S_P$) en surface, généralement de façon rectiligne passant par le puits, et de disposer des récepteurs sismiques ($R_1$, $R_2$, ..., $R_n$) dans le puits, à différentes profondeurs. Sur cette figure, x représente une direction géographique, et z représente la profondeur.

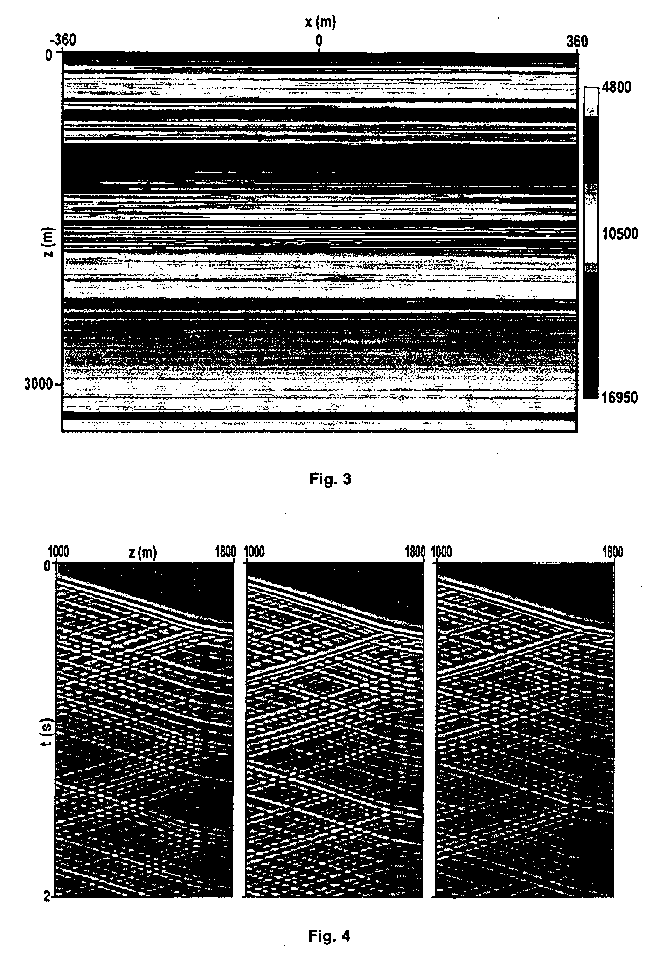

La figure 4 représente des données typiques issues de ce type d'acquisition. Ces données font apparaître un train d'ondes descendantes constitué de nombreuses arrivées : l'arrivée première ne domine pas vraiment l'ensemble des suivantes (appelées « arrivées secondaires »). Cette observation fournit la ligne directrice du traitement standard de données sismiques de puits : elle est basée sur une séparation des données en ondes montantes et ondes descendantes, suivie d'une déconvolution de la première par la deuxième.

Mais cette approche repose sur une vision 1 D de la propagation des ondes, ce qui n'est pas vraiment réaliste surtout pour des données où la source n'est pas à l'aplomb du puits.

Dès que la propagation des ondes s'effectue suivant des directions autres que la verticale, une estimation de la distribution de vitesse est essentielle pour effectuer le traitement. Dans l'hypothèse où la terre est considérée comme un milieu 1 D, des extensions au traitement présenté ci-dessus ont été proposées : ces extensions reposent sur l'application de corrections dynamiques (corrections de déport alias NMO).

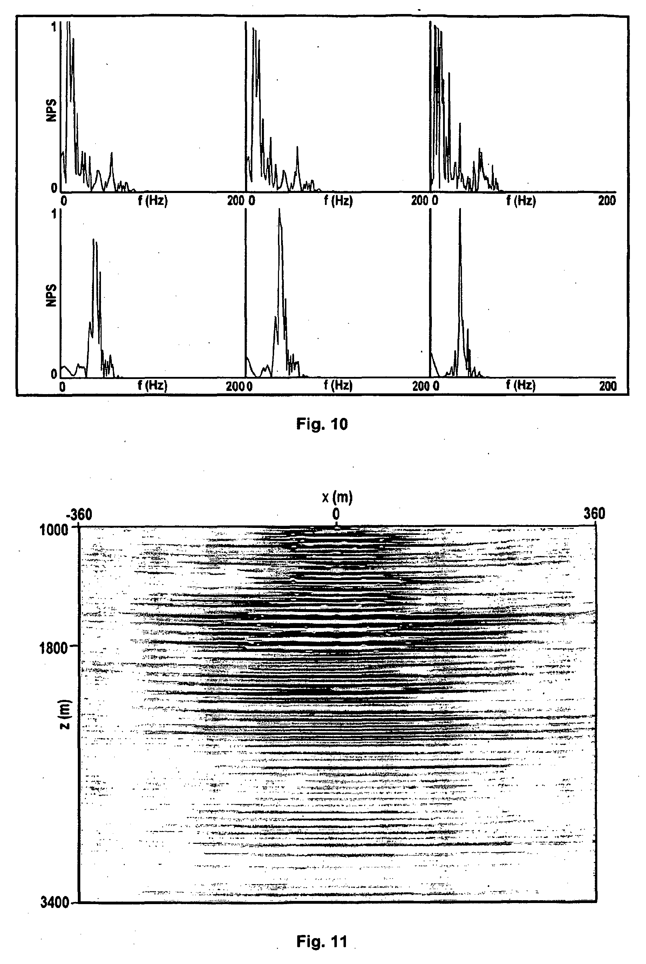

Mais ce concept ne permet pas de prendre en compte les événements sismiques engendrés par les arrivées secondaires. En effet, la correction à appliquer à ces événements n'a rien d'intrinsèque et dépend de l'événement. S'il n'y avait pas d'arrivées secondaires et, de façon plus générale pas de réflexions multiples, hypothèse peu réaliste, l'imagerie des données sismiques de puits pourrait être réalisée par une simple migration des enregistrements, la distribution de vitesse ayant été préalablement estimée. On obtiendrait ainsi, pour peu que certaines précautions aient été prises, une estimation de la réflectivité (quantité liée à l'impédance) du sous-sol. Cependant, l'illumination particulière du milieu (liée à un dispositif d'acquisition localisé dans un puits) fait que le résultat est entaché de distorsions, comme l'illustre la figure 11, alors que le modèle du sous-sol recherché, illustré sur la figure 3, est quasiment 1 D.

Le document suivant présente les techniques connues de traitement de données de sismique de puits : Bob A. Hardage, Collection Handbook of geophysical exploration, Geophysical Press, 1985.

Ainsi, les techniques antérieures ont du mal à concilier prise en compte des réflexions multiples et propagation multidimensionnelle, et a fortiori, dans des milieux autres que des milieux 1D. Par ailleurs, ces techniques d'imagerie utilisent des processus linéaires (déconvolution ou migration), ayant pour conséquence de limiter la résolution des images sismiques à la bande de fréquence de la sismique (de l'ordre de $\lambda/2$ si $\lambda$ est la longueur d'onde sismique).

L'objet de la présente invention est une méthode pour construire une image du sous-sol en prenant en compte, tant les réflexions multiples que le caractère multidimensionnel de la propagation. De plus, par l'utilisation d'une technique d'imagerie non linéaire, l'invention permet d'améliorer sensiblement la résolution verticale, et notamment d'aller bien au delà de la bande de fréquence de la sismique (de $\lambda/2$ à $\lambda/10$ en fonction de l'hétérogénéité des sédiments).

**La méthode selon l'invention**

L'objet de l'invention concerne une méthode pour construire une image représentative d'une distribution d'impédances acoustiques dans une zone du sous-sol, au moyen de mesures sismiques acquises selon une configuration de type « walkaway » comportant une émission d'ondes sismiques depuis la surface dans le sous-sol et la réception par des récepteurs positionnés à différentes profondeurs dans au moins un puits. La méthode nécessite également une estimation du champ de vitesse de propagation d'ondes sismiques dans le sous-sol. La méthode comporte les étapes suivantes :

- on sélectionne $p$ angles d'éclairage, chaque angle d'éclairage correspondant à une direction de propagation d'un front d'onde au niveau d'une limite supérieure de ladite zone ;

- on organise lesdites mesures sismiques, en des données $D_p$ organisées par angle d'éclairage $p$ ;

- on détermine, à l'intérieur de ladite zone, ladite distribution d'impédances acoustiques au moyen d'une inversion, au cours de laquelle on minimise un écart entre lesdites données organisées $D_p$ issues desdites mesures sismiques, et de données issues d'une estimation par résolution d'une équation de propagation des ondes à partir dudit champ de vitesses, d'une distribution d'impédance acoustique, et d'une distribution de pression au niveau de ladite limite supérieure de la zone pour chaque angle d'éclairage.

Pour minimiser l'écart, on peut prendre en compte une information a priori définie par une direction de pendage concernant une structuration de la distribution d'impédance acoustique, et une direction de pendage concernant une structuration de la distribution de pression. Pour ce faire, on peut minimiser une fonctionnelle des moindres carrés comportant : un premier terme mesurant ledit écart, un second terme correspondant à une dérivée directionnelle concernant la structuration de la distribution d'impédance acoustique et pondéré par un poids $\varepsilon_I$, et un troisième terme correspondant à une dérivée directionnelle concernant la structuration de la distribution de pression et pondéré par un poids $\varepsilon_{B,p}$. Les poids peuvent être déterminés par une technique d'essais-erreurs. On peut également appliquer les règles suivantes :

- un résultat faisant apparaître des résidus corrélés trop forts, traduit une valeur trop forte d'au moins un des deux types de poids ;

- un résultat faisant apparaître une distribution d'impédance acoustique avec des variations latérales anormalement faibles, traduit une valeur trop forte accordée au poids $\varepsilon_I$.

Selon l'invention, on peut ajouter un terme à la fonctionnelle, pour prendre en compte une information a priori déterminée au niveau d'au moins un puits forés au travers de la zone.

Pour organiser les données sismiques en données pas angle d'éclairage, on peut utiliser une transformation de Radon.

Selon l'invention, on peut interpréter l'image en termes lithologiques et/ou pétrophysiques, de façon à surveiller un site de stockage géologique de gaz acides, ou de façon à localiser et évaluer des réservoirs pétroliers. On peut également utiliser l'image en complément d'autres diagraphies pour caractériser la zone.

D'autres caractéristiques et avantages de la méthode selon l'invention, apparaîtront à la lecture de la description ci-après d'exemples non limitatifs de réalisations, en se référant aux figures annexées et décrites ci-après.

**Présentation des figures**

- La figure 1 illustre la configuration d'acquisition de type "walkaway".

- La figure 2 représente une distribution de vitesse des ondes dans le sous-sol, selon une direction X et la profondeur Z.

- La figure 3 représente une distribution d'impédance acoustique dans le sous-sol, selon une direction X et la profondeur Z.

- La figure 4 représente trois collections point de tir (associées à des sources localisées en x = -315, x = 0 et x = + 315 m) extraites des données "walkaway".

- La figure 5 représente, pour des angles d'éclairage de -10°, 0° et 10°, le résultat de la transformation de Radon ("slant stack") des collections points de tir composant les données "walkaway" de la figure 4.

- La figure 6 montre la distribution d'impédance retrouvée.

- La figure 7 compare trois profils d'impédance (I) extraits des figures 3 et 6 pour x = 0, x = 40 et x = 200 m.

- La figure 8 montre les résidus associés à des angles d'éclairage de -10°, 0° et 10°.

- La figure 9 montre les conditions aux limites retrouvées pour des angles d'éclairage de - 10°, 0° et 10°.

- La figure 10 compare les modules des transformées de Fourier des parties profondes (c'est-à-dire pour z allant de 2000 m à 3400 m) des profils d'impédance représentés sur la figure 7 et des traces correspondantes de la section migrée.

- La figure 11 montre le résultat obtenu par migration profondeur avant sommation des données.

**Description détaillée de la méthode**

Pour des raisons de clarté, la méthode est décrite dans un contexte 2D, la généralisation à trois dimensions étant immédiate.

On appelle « cible », la partie du sous-sol que l'on souhaite caractériser par une image haute résolution, au moyen d'une acquisition de données sismiques de type « walkaway » (figure 1).

Soit une cible bidimensionnelle caractérisée par les distributions d'impédance et de vitesse représentées respectivement sur les figures 2 et 3. La méthode vise à reconstruire la distribution d'impédance acoustique par une image haute résolution, à partir de données de type "walkaway", et d'une estimation de la distribution de vitesse de propagation des ondes P dans le sous-sol.

La figure 1 montre une configuration d'acquisition de type "walkaway". Selon un exemple de mise en oeuvre, on utilise cent récepteurs ($R_1$,...) disposés dans le puits (supposé vertical selon l'exemple et représenté par une ligne verticale en pointillé sur la figure 1) tous les huit mètres, entre les profondeurs 1000m et 1800m. La profondeur est notée z, elle est exprimée en mètre. La méthode est présentée dans le cas d'un puits vertical mais peut être adaptée sans difficulté au cas de puits déviés, ou au cas multi-puits. On utilise quinze sources ($S_1$,...), disposées au voisinage de la surface, et séparées de 45m. Ces sources couvrent, symétriquement par rapport au puits, un intervalle de 630m de large. La limite supérieure de la cible, est appelée le « toit ». Le toit de la cible, représenté en pointillé sur la figure 1, est défini par l'utilisateur de la méthode, mais il doit passer par, ou au voisinage, du récepteur le moins profond (récepteur $R_1$ sur la figure 1). Ainsi, la profondeur du récepteur le moins profond, $R_1$, définit la surface en dessous de laquelle la méthode construit une image du sous-sol, représentant la distribution des impédances acoustiques. En revanche, le toit n'est pas nécessairement horizontal, ni même plan. La cible s'arrête à une profondeur dépendant, entre autres, de la durée des traces sismiques enregistrées. Ainsi, le sous-sol englobe non seulement la cible, mais aussi les terrains situés au dessus.

La figure 4 représente trois collections point de tir (associées à des sources localisées en x = -315, x = 0 et x = + 315 m) extraites des données "walkaway". La mesure est ici la composante verticale de la vitesse de déplacement mesurée en chaque capteur. Ces données ont été calculées par résolution numérique de l'équation des ondes acoustiques en 2D. Pour illustrer la méthode, la distribution de vitesse utilisée est celle de la cible, c'est-à-dire celle illustrée sur la figure 2. L'ondelette sismique utilisée pour cette modélisation est un signal de Ricker (dérivée seconde d'une gaussienne centrée sur 25 Hz).

Ainsi, à partir de la distribution de vitesse de propagation des ondes P dans le sous-sol préalablement estimée, et des données de type "walkaway" acquises, la méthode vise à reconstruire une distribution d'impédance acoustique.

Problème direct

Pour déterminer cette image haute résolution, la méthode comporte une recherche simultanée de la distribution d'impédance à l'intérieur de la cible et des excitations sismiques par angle d'éclairage. Cette recherche se fait par résolution d'un problème inverse. Avant de décrire le problème inverse, le problème direct qui lui est associé est décrit.

On considère l'équation des ondes acoustiques décrivant, à partir de conditions initiales nulles, l'évolution, partant d'un état initial où le milieu est au repos, du champ de pression en fonction du temps à l'intérieur de la cible. Le champ de vitesse étant connu, ce champ de pression $P(x,z,t)$ est complètement décrit une fois spécifiées :

- la distribution d'impédance acoustique $I(x,z)$;

- la condition aux limites au toit de la cible. Selon un exemple de réalisation, on utilise une condition aux limites de type Dirichlet, la valeur de la pression au toit de la cible en fonction de coordonnée latérale $x$ et du temps $t$. On note cette condition aux limites $B(x,t)$. Cette condition aux limites caractérise l'éclairage de la cible.

De façon précise, $P$ est solution de l'équation des ondes qui s'écrit ($c(x,z)$ désigne la distribution de vitesse de propagation) :

$$\frac{1}{Ic}\frac{\partial^2 P}{\partial t^2} - \nabla\left(\frac{c}{I}\vec{\nabla}P\right) = 0 \; dans \; la \; cible \; et \; pour \; t \geq 0$$

avec la condition aux limites : $P = B(x, t)$ *au toit de la cible*
et les conditions initiales : $P = 0$ *pour* $t \leq 0$

Cette équation des ondes acoustiques correspond à l'équation d'évolution en temps (par opposition à l'écriture dans le domaine des fréquences temporelles conduisant à l'équation d'Helmholtz) et, de surcroît, dans sa forme la plus simple, notamment sans prendre en compte l'atténuation. Des modifications dans l'écriture de l'équation des ondes ne demandent que l'adaptation de la méthode numérique utilisée pour sa résolution (et pour le calcul du gradient de la fonctionnelle des moindres carrés si l'on utilise une méthode d'optimisation basée sur ce calcul).

Le fait que le champ de pression à l'intérieur de la cible soit complètement déterminé, une fois spécifiées la distribution d'impédance et la condition aux limites au toit de la cible, permet de considérer le champ de pression à l'intérieur de la cible comme une fonction de $I(x, z)$ et de $B(x,t)$, et amène à introduire l'opérateur de modélisation $F$ suivant :

$$F : \big( I(x,z), B(x,t) \big) \rightarrow P(x,z,t)$$

On note que l'opérateur $F$ est non linéaire en la distribution d'impédance. Par conséquent, pour une condition aux limites donnée, la réponse sismique à la somme de deux distributions d'impédance n'est pas la somme des réponses sismiques associées à chaque distribution d'impédance. En pratique on a besoin d'évaluer, pour des couples $(I(x,z),B(x,t))$ donnés, l'image par $F$ de ces couples : cette opération est réalisée par résolution numérique de l'équation des ondes, par la méthode des différences finies (par exemple K. R. Kelly, et al., 1976, « Synthetic seismograms: a finite - difference approach", Geophysics, 41, 2), ou la méthode des éléments finis (par exemple Kurt J. Marfurt, 1984, « Accuracy of finite - difference and finite - element modeling of the scalar and elastic wave equations", Geophysics, 49, 533).

Problème inverse

Considérant désormais le problème inverse associé :

Grâce aux données de type "walkaway", nous disposons de mesures liées au champ de pression dans la cible. Selon un exemple on utilise les composantes $u^x(t)$ et $u^z(t)$ de la vitesse de déplacement engendré par le champ de pression. Ces vitesses sont directement mesurées si l'on utilise des géophones comme récepteurs. On pourrait également utiliser une mesure portant sur une dérivée ou une intégrale en temps de ces quantités (par exemple accélération ou bien le déplacement lui-même). On pourrait également utiliser directement la pression mesurée au capteur, si ce dernier est un hydrophone.

On note $D_p$ le vecteur de données pour chaque angle d'éclairage $p$. Soit $O$ l'opérateur d'observation, c'est-à-dire l'opérateur qui, au champ de pression à l'intérieur de la cible $P(x,z,t)$, associe les mesures $D_p$. On peut par exemple utiliser les équations d'Euler pour cet opérateur $O$ :

$$\frac{\partial u_x}{\partial t} - \frac{c}{I}\frac{\partial p}{\partial x} = 0$$

$$\frac{\partial u_z}{\partial t} - \frac{c}{I}\frac{\partial p}{\partial z} = 0$$

$$\frac{\partial p}{\partial t} - \frac{c}{I}\frac{\partial u_x}{\partial x} - \frac{c}{I}\frac{\partial u_z}{\partial z} = 0$$

Le problème inverse consiste à déterminer la distribution d'impédance acoustique $I(x,z)$ et les différentes conditions aux limites $B_p(x,t)$, à partir de la collection des différents $D_p$.

La méthode comporte principalement les étapes suivantes :

    1. Construction de collection de données $D_p$ pour chaque angle d'éclairage

        a. sélection d'une suite d'angles d'éclairage de la cible ;

        b. transformation des collections point de tir en des données par angle d'éclairage ;

    2. Détermination d'une information a priori concernant le pendage des dépôts à l'intérieur de la cible ;

    3. Recherche simultanée de $I(x,z)$ à l'intérieur de la cible et des différentes conditions aux limites $B_p(x,t)$ par angle d'éclairage ;

## Étape 1 : Construction de collection de données $D_p$ pour chaque angle d'éclairage

### a. Sélection d'une suite d'angles d'éclairage de la cible

On appelle « angle d'éclairage », la direction de propagation d'un front d'onde au toit de la cible. En deux dimensions, cette direction est définie par l'angle fait avec la verticale. En trois dimensions, "l'angle d'éclairage" est défini par une pente (l'angle fait avec la verticale) et un azimut.

De façon à conserver la même quantité d'information lors de l'étape suivante de transformation des collections point de tir en collections par classe d'angle d'éclairage, on sélectionne autant d'angles que de point de tirs (mais ce choix n'est pas essentiel). Selon un exemple, les angles sélectionnés couvrent l'intervalle -10°, +10°. L'interprétation de la sismique de surface révélant une structure quasi 1 D, il est naturel de sélectionner des angles d'éclairage centrés sur 0°.

### b. Transformation des collections point de tir en des données par angle d'éclairage

Pour chacun des angles d'éclairage sélectionnés, on transforme les collections point de tir en des données par angle d'éclairage.

Les collections point de tir sont les données brutes issues de l'acquisition de type « walkaway ». Il s'agit d'une organisation des données bien connue des spécialistes.

Ces données par angle d'éclairage, notées $D_p$, sont définies comme la réponse sismique de la cible à une excitation sismique par angle d'éclairage, correspondant à un champ d'onde qui, vu au niveau du (des) récepteur(s) le (s) moins profond(s), serait constitué d'une succession de fronts d'ondes correspondant à peu près à l'angle d'éclairage spécifié.

L'idée de base est d'effectuer une transformation de Radon sur les collections point de tir (technique appelée "*slant stack*"). Une telle technique est décrite par exemple dans les documents suivants :

L. Lu and G. F. Gardner, 1991, "Slant-Stack Processing", SEG Books, 1

J.F. Clarbout, 1985, "Imaging the earth's interior", Blackwell scientific publications

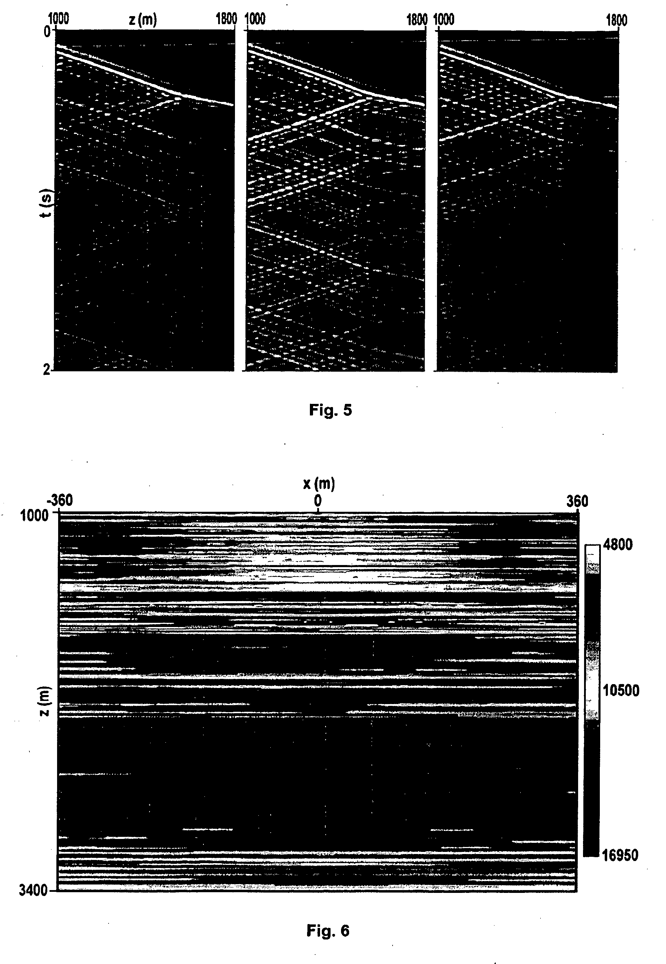

Cette technique vise à transformer la réponse sismique mesurée en un capteur pour différentes positions de la source sismique, en la réponse à une excitation onde plane se propageant depuis la surface suivant une direction donnée. Cette technique a été mise en oeuvre pour obtenir les collections par angle représentées sur la figure 5. La figure 5 représente, pour des angles d'éclairage de -10°, 0° et 10°, le résultat de la transformation de Radon ("slant stack") des collections points de tir composant les données "walkaway".

Dans ce cas, l'angle d'éclairage est en général différent de l'angle défini pour la mise en oeuvre du "slant stack", mais la relation entre l'un et l'autre peut être calculée par exemple par un tracé de rayons par onde plane. Dans le cas d'importantes variations latérales de vitesse de propagation dans le milieu au dessus de la cible, l'onde plane envoyée en surface peut s'être notablement déformée lors de son arrivée sur le toit de la cible. Dans ce cas il est préférable d'utiliser une approche plus raffinée telle que la technique d'illumination contrôlée décrite dans le document suivant :

W. E. A. Rietveld and A. J. Berkhout, 1994, "Prestack depth migration by means of controlled illumination", Geophysics, 59, 801

**Étape 2 : Détermination d'une information a priori concernant le pendage des dépôts à l'intérieur de la cible**

Cette information est fournie par une interprétation (pointé sismique) sur la sismique de surface, des événements sismiques correspondant aux couches sédimentaires constituant la cible. Selon un exemple, on considère comme modèle a priori un modèle stratifié horizontalement. On rappelle, pour l'extension au cas 3D, qu'en 3D un pendage est défini par une pente et un azimut. Ces informations sur les pendages caractérisent :

-   la structuration lithologique de la distribution d'impédance acoustique ; et

-   la structuration des différentes conditions aux limites.

Ces fonctions (impédance ou conditions aux limites) sont censées varier doucement suivant des directions qui peuvent être prédites à l'avance (et qui, pour les conditions aux limites, dépendent de l'angle d'éclairage $p$ ).

Ainsi, on définit une direction de pendage concernant la structuration de la distribution d'impédance (notons que cette direction peut dépendre du point c'est-à-dire du couple (x,z) considéré), et on définit une direction de pendage concernant la structuration de la condition aux limites (notons que la direction peut dépendre du point c'est-à-dire du couple (x,t) considéré).

**Étape 3 : Recherche simultanée de la distribution d'impédance $I(x,z)$ à l'intérieur de la cible et des conditions aux limites $B_p(x,t)$ par angle d'éclairage ;**

On recherche simultanément la distribution d'impédance $I(x,z)$ (ou tout autre paramètre lié à l'impédance) à l'intérieur de la cible, et les différentes conditions aux limites $B_p(x,t)$ par angle d'éclairage (excitations sismiques).

Cette recherche est effectuée en minimisant, sur l'ensemble des angles d'éclairage considérés, l'écart entre les données par angle d'éclairage $D_p$, et la réponse sismique de la cible. Cette réponse sismique est considérée comme fonction de cette distribution d'impédance $I(x,z)$ et de la condition aux limites $B_p(x,t)$ pour l'angle d'éclairage $p$ considéré :

$$O \circ F\big(I(x,z), B_p(x,t)\big)$$

Ainsi $D_p$ correspond aux données sismiques mesurées, et $O°F(I(x,z),B_p(x,t))$ correspond à ces données calculées en fonction des inconnues $I(x,z)$ et $B_p(x,t)$.

Cette minimisation est réalisée en prenant en compte l'information a priori disponible (étape 2), concernant $I(x,z)$ et $B_p(x,t)$. On peut quantifier l'écart par rapport à ces informations a priori, suivant une technique d'évaluation de la norme $L^2$ de dérivées directionnelles portant sur les fonctions concernées : $I(x,z)$ ou $B_p(x,t)$.

On recherche donc la distribution d'impédance acoustique $I(x,z)$ et les conditions aux limites $B_p(x,t)$ associées

aux différents angles d'éclairage qui expliquent au mieux les données $D_p$ tout en satisfaisant les informations a priori.

Pour ce faire, on peut rechercher ces quantités comme réalisant le minimum de la fonctionnelle des moindres carrés :

$$J\left(I,\{B_p\}\right) = \sum_p \left\| D_p - O \circ F(I, B_p) \right\|_{D,p}^2 + \varepsilon_I \left\| \partial_I I \right\|^2 + \sum_p \varepsilon_{B,p} \left\| \partial_p B_p \right\|_{B,p}^2$$

où :

- $\{B_p\}$ désigne l'ensemble des conditions aux limites que l'on se propose de retrouver pour chaque angle d'éclairage $p$ ;

- $\|\ \|_{D,p}$ désigne la norme dans l'espace des données pour l'angle d'éclairage $p$ ;

- $\|\ \|$ désigne la norme de type $L^2$ éventuellement pondérée (ou euclidienne si l'on s'intéresse à des quantités discrètes) dans l'espace des fonctions définies sur la zone cible

- le symbole $\partial_I$ désigne la dérivée directionnelle choisie lors de la spécification de l'information a priori concernant la structuration de la distribution d'impédance (notons que la direction peut dépendre du point c'est-à-dire du couple $(x,z)$ considéré);

- $\|\ \|_{B,p}$ désigne la norme de type $L^2$ éventuellement pondérée (ou euclidienne si l'on s'intéresse à des quantités discrètes) dans l'espace des fonctions de $x$ et de $t$ où sont définies les conditions aux limites pour l'angle d'éclairage $p$;

- le symbole $\partial_p$ désigne la dérivée directionnelle choisie lors de la spécification de l'information a priori concernant la structuration de la condition aux limites (notons que la direction peut dépendre du point c'est à dire du couple $(x, t)$ considéré);

- $\varepsilon_I$ désigne un poids de régularisation traduisant la confiance que l'on accorde à l'information a priori concernant la structuration de la distribution d'impédance

- $\varepsilon_{B,p}$ désigne un poids de régularisation traduisant la confiance que l'on accorde à l'information a priori concernant la structuration de la condition aux limites.

La recherche de ce minimum peut être mise en oeuvre en utilisant les techniques classiques de l'optimisation telles que décrites par exemple dans le document suivant :

J. Nocedal and S. J. Wright, 1999, "Numerical Optimization", Springer

A titre d'exemple, on peut déterminer le minimum de la fonctionnelle des moindres carrés par les méthodes d'optimisation appelées méthodes de descente : ces méthodes itératives construisent une suite de "couples" $(I,\{B_p\})$ faisant décroître la valeur de la fonctionnelle, la construction de l'itéré suivant se faisant en exploitant le gradient de la fonctionnelle à l'itéré considéré.

Concernant le choix des poids de régularisation $\varepsilon_I$ et $\varepsilon_{B,p}$, il peut se faire par essai-erreur, guidé par la règle suivante : l'objectif est d'obtenir in fine une distribution d'impédance conforme aux attentes du sédimentologue, et des résidus (c'est-à-dire la différence $D_p - O°F(I,B_p)$) raisonnables du point de vue du géophysicien.

Sur l'exemple présenté, en appliquant la méthode selon l'invention avec des valeurs identiques de $\varepsilon_{B,p}$ pour les différents $p$, on peut obtenir la distribution d'impédance représentée sur la figure 6. Celle-ci montre une structure conforme aux spécifications, tout en montrant des variation latérales réalistes.

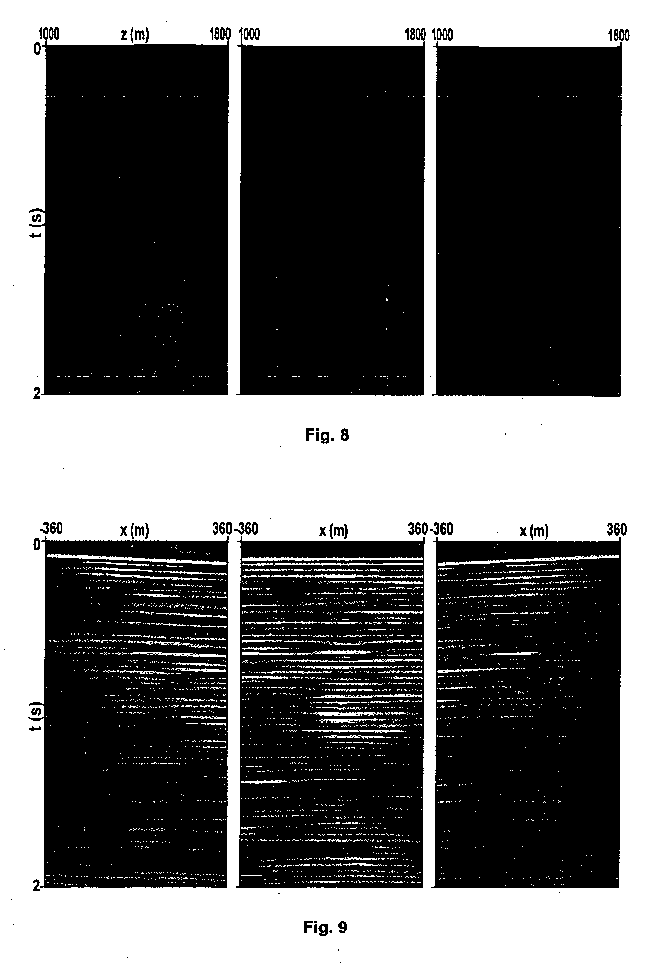

La figure 8 montre les résidus associés à des angles d'éclairage de -10°, 0° et 10°. Le gain appliqué pour la représentation graphique est le même que celui utilisé pour la figure 5.

La figure 9 montre les conditions aux limites retrouvées pour de angles d'éclairage de - 10°, 0° et 10°. Ces conditions aux limites satisfont bien la condition de régularité dépendante de l'angle d'éclairage. Les nombreux désaccords entre le résultat et la condition de régularité intégrée dans la fonctionnelle des moindres carrés illustrent la robustesse de la méthode pour peu que les poids de régularisation aient été bien choisis.

Les résidus illustrés figure 8 apparaissent négligeables, malgré des divergences non négligeables par rapport à l'information a priori spécifiée concernant les conditions aux limites retrouvées (figure 9) : les valeurs choisies pour les deux types de poids ont géré convenablement les conflits entre les différentes informations manipulées (données sismiques par angle d'éclairage, information a priori sur la structuration de la distribution d'impédance, information a priori sur la structuration des conditions aux limites).

Pour parvenir à l'objectif visé, et corriger une mauvaise estimation des valeurs à affecter aux poids, on peut appliquer les règles suivantes :

- un résultat faisant apparaître des résidus corrélés trop forts, traduit une valeur trop forte d'au moins un des deux types de poids ;

- un résultat faisant apparaître une distribution d'impédance avec des variations latérales anormalement faibles, traduit une valeur trop forte accordée au poids $\varepsilon_I$.

D'autres informations, telles que des diagraphies et la connaissance sédimentologique, peuvent être prises en compte comme information a priori. Ces données peuvent être utilisée par des termes additionnels intégrés dans la fonctionnelle des moindres carrés, via un paramétrage approprié, des contraintes permettant de limiter l'espace des distributions d'impédance, ...

D'autres techniques pour intégrer l'information a priori peuvent être envisagées. Par exemple, on peut contraindre les quantités recherchées (distribution d'impédances et conditions aux limites) à satisfaire l'information a priori, au moyen d'un paramétrage n'autorisant que des distributions conformes à l'information a priori.

### Variantes

Selon un mode de réalisation, on utilise d'autres conditions aux limites que celles de Dirichlet au toit du réservoir.

On peut par exemple spécifier le train d'ondes descendantes par des conditions aux limites "absorbantes" non homogènes du type $\dfrac{1}{c}\dfrac{\partial P}{\partial t}+\dfrac{\partial P}{\partial z}=B_0(x,t)$, ou plus exactement, la version étendue au cas d'une impédance rendue hétérogène en raison de l'hétérogénéité de la densité comme expliqué dans le document suivant :

B. Chalindar, 1988, « Conditions aux limites absorbantes appliquées à des problèmes hyperboliques intervenant en sismique », Thèse, Université de Saint Etienne.

Une condition de ce type est en fait à adapter en fonction de l'angle d'éclairage et de la pente locale du toit de la cible.

On peut encore utiliser des conditions aux limites absorbantes d'ordre supérieur comme décrit dans

Robert W. Clayton and Björn Engquist, 1980, « Absorbing boundary conditions for wave - equation migration », Geophysics, 45, 895

L'utilisation d'autres conditions aux limites ne demande que l'adaptation de la méthode numérique utilisée pour résoudre l'équation des ondes (et pour le calcul du gradient de la fonctionnelle des moindres carrés si l'on utilise une méthode d'optimisation basée sur ce calcul).

Selon un autre mode de réalisation, on utilise des éclairages par des champs d'ondes constitués de fronts d'onde non plans. Nous avons basé notre présentation en supposant un éclairage par des fronts d'ondes approximativement plans (étape b de l'étape 1 : données par angle d'éclairage). Cette stratégie a l'avantage de la simplicité tant dans la présentation que dans la mise en oeuvre. Mais ce choix n'est en aucune façon limitatif : le point important est de pouvoir prédire la forme des fronts d'ondes éclairant la cible et de pouvoir prendre en compte cette information a priori.

Enfin, selon un autre mode de réalisation, la méthode est utilisée pour l'estimation de la distribution d'impédances S (et non plus d'impédance P), la distribution de vitesse de propagation des ondes S ayant été préalablement estimée. La transposition de la méthode à cette finalité est immédiate dès lors que l'on dispose d'une source sismique excitant le mode SH (ce qui demande de placer la source dans un milieu solide, par opposition aux sources utilisées en sismique marine). En effet le champ de déplacement (ou de vitesse de déplacement) transverse est encore solution de l'équation des ondes dans laquelle apparaît la vitesse de propagation des ondes S et l'impédance S.

### Avantages

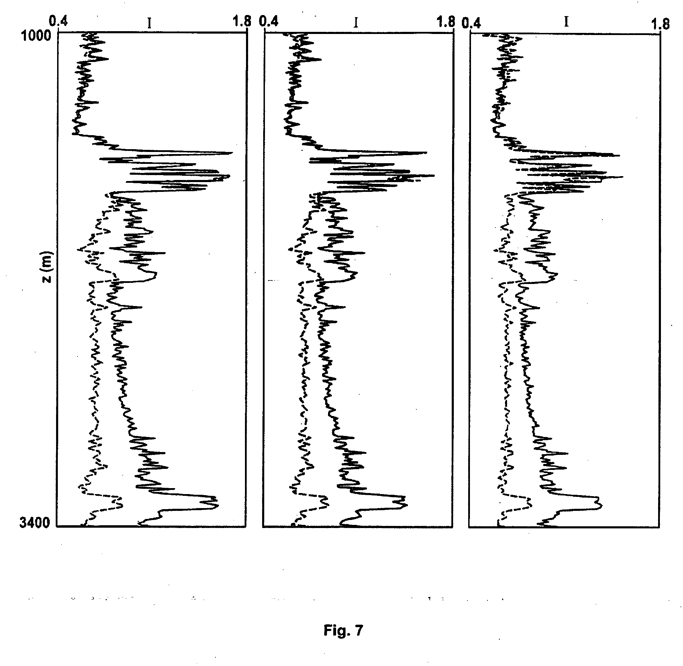

La méthode selon l'invention fournit une image de la zone cible du sous-sol, représentant la distribution d'impédance estimée (figure 6). Ce résultat est à la fois haute résolution et quantitatif. La résolution verticale de la distribution d'impédance obtenue fournit en effet des informations très détaillées sur la distribution recherchée (figure 7). Cette résolution verticale est largement supérieure à celle des méthodes classiques, telles que la migration des données présentée figure 11. La figure 11 montre le résultat obtenu par migration profondeur avant sommation des données. L'image est entachée de distorsions (courbure des couches, événements provenant de l'imagerie des réflexions multiples) et montre une résolution verticale très largement inférieure au résultat de la figure 6.

La résolution verticale fournie par la méthode dépend de la gamme de profondeurs considérées :

- au voisinage de l'intervalle de profondeur couvert par les récepteurs, la résolution est essentiellement gouvernée par la distance séparant deux récepteurs consécutifs ;

- en dessous, on perd, comme il est habituel en sismique réflexion, les composantes très basse fréquence de la distribution d'impédance mais la résolution verticale, même si elle est moins bonne que plus haut, reste exceptionnellement bonne et largement meilleure que celle fournie par les méthodes traditionnelles. Dans cette partie profonde, le gain en résolution s'explique par le caractère non linéaire de l'inversion réalisée (alors que les techniques d'imagerie classiques sont linéaires). L'opérateur de modélisation $F$ est en effet non linéaire, et cette particularité le rend apte à modéliser les diffractions / réflexions multiples. Dans le cas de dépôts à forte hétérogénéité verticale, comme c'est généralement le cas pour les terrains sédimentaires, les effets de diffractions / réflexions multiples sont importants et les prendre en compte permet de gagner en résolution verticale et notamment de sortir de la limitation à la bande des fréquences sismiques inhérente aux méthodes conventionnelles. Le gain en résolution verticale est illustré sur la figure 10 (la résolution est caractérisée par la largeur de bande du spectre d'amplitude). La figure 10 compare les modules des transformées de Fourier des parties profondes (c'est-à-dire pour z allant de 2000 m. à 3400 m.) des profils d'impédance représentés sur la figure 7, et des traces correspondantes de la section migrée (après conversion de ces résultats d'une profondeur exprimée en mètre à une profondeur exprimée en temps de propagation vertical aller-retour ). Ces transformées de Fourier ont été normalisées de façon à rendre comparables les amplitudes du pic le plus important situé au dessus de 5 Hz. On constate une augmentation très significative de la largeur de bande, révélatrice du gain en résolution verticale accessible par application de notre méthode.

**Utilisation**

Interprétations lithologiques ou pétrophysiques

L'interprétation en termes lithologiques ou pétrophysiques du résultat de l'invention fournit des informations très précieuses, tant dans un contexte d'exploration que dans un contexte de monitoring ou de surveillance des réservoirs. En effet, une telle interprétation permet de surveiller un site de stockage géologique de gaz acides, ou de localiser et évaluer des réservoirs pétroliers.

Utilisation comme compléments aux diagraphies

Pour mieux connaître le sous-sol, les géophysiciens utilisent des mesures réalisées dans les puits (diagraphies, carottages). Ces diagraphies offrent en général des mesures précises, notamment en terme de résolution, mais dont la pertinence est limitée au voisinage immédiat du puits (typiquement un mètre). Ces mesures sont essentielles pour connaître la lithologie et les propriétés pétrophysiques des couches traversées.

L'invention peut être vue comme un nouveau type de diagraphie, avec certes une résolution verticale moins bonne que les diagraphies traditionnelles, mais avec l'avantage d'élargir considérablement le voisinage du puits investigué et même, de fournir une estimation des variations latérales à l'intérieur de ce voisinage.

Comme les diagraphies, le résultat de l'invention peut être utilisé tel quel, ou servir de point d'entrée dans des logiciels de traitement et d'interprétation de données sismiques (déconvolution stratigraphique, inversion de données sismiques).

Utilisation dans le contexte du monitoring ou de la surveillance des réservoirs

Dans le contexte où les données "walkaway" sont acquises en fonction du temps calendaire, on peut exploiter des variations temporelles de la distribution d'impédance estimée par la méthode pour détecter des changements dans les propriétés pétrophysiques du réservoir, afin, par exemple, d'en optimiser la production, ou de sa couverture, afin de prévoir des risques d'accidents.

Enfin, l'obtention à la fois d'une distribution d'impédance P et d'impédance S renseigne sur le contenu en fluide. Cette information est très précieuse pour la gestion des réservoirs souterrains et des aquifères. Soulignons en particulier l'application à l'inversion jointe de données sismiques dans un contexte de sismique répétée et de données de production.

**Revendications**

**1.** Méthode pour construire une image représentative d'une distribution d'impédances acoustiques dans une zone du sous-sol, au moyen de mesures sismiques acquises selon une configuration de type « walkaway » comportant des émissions d'ondes sismiques depuis la surface dans le sous-sol et des réceptions par des récepteurs positionnés à différentes profondeurs dans au moins un puits, et à partir d'une estimation du champ de vitesse de propagation d'ondes sismiques dans le sous-sol, **caractérisée en ce qu'**elle comporte les étapes suivantes :

- on sélectionne p angles d'éclairage, chaque angle d'éclairage correspondant à une direction de propagation d'un front d'onde au niveau d'une limite supérieure de ladite zone ;
- on organise lesdites mesures sismiques, en des données $D_p$ organisées par angle d'éclairage $p$ ;
- on détermine, à l'intérieur de ladite zone, ladite distribution d'impédances acoustiques au moyen d'une inversion, au cours de laquelle on minimise un écart entre lesdites données organisées $D_p$ issues desdites mesures sismiques, et de données issues d'une estimation par résolution d'une équation de propagation des ondes à partir dudit champ de vitesses, d'une distribution d'impédance acoustique, et d'une distribution de pression au niveau de ladite limite supérieure de la zone pour chaque angle d'éclairage.

**2.** Méthode selon la revendication 1, dans laquelle on minimise l'écart, en prenant en compte une information a priori définie par une direction de pendage concernant une structuration de la distribution d'impédance acoustique, et une direction de pendage concernant une structuration de la distribution de pression.

**3.** Méthode selon la revendication 2, dans laquelle on minimise l'écart, en minimisant une fonctionnelle des moindres carrés comportant un premier terme mesurant ledit écart, un second terme correspondant à une dérivée directionnelle concernant la structuration de la distribution d'impédance acoustique et pondéré par un poids $\varepsilon_I$. et un troisième terme correspondant à une dérivée directionnelle concernant la structuration de la distribution de pression et pondéré par un poids $\varepsilon_{B,p}$.

**4.** Méthode selon la revendication 3, dans laquelle lesdits poids sont déterminés par une technique d'essais-erreurs.

**5.** Méthode selon la revendication 4, dans laquelle les poids sont déterminés en appliquant les règles suivantes:

- un résultat faisant apparaître des résidus corrélés trop forts, traduit une valeur trop forte d'au moins un des deux types de poids ;
- un résultat faisant apparaître une distribution d'impédance acoustique avec des variations latérales anormalement faibles, traduit une valeur trop forte accordée au poids $\varepsilon_I$.

**6.** Méthode selon l'une des revendications précédentes, dans laquelle on minimise l'écart, en ajoutant un terme à la fonctionnelle pour prendre en compte une information a priori déterminée au niveau d'au moins un puits forés au travers de la dite zone, en définissant une direction de pendage concernant une structuration de la distribution d'impédance, et en définissant une direction de pendage concernant une structuration d'une condition aux limites.

**7.** Méthode selon l'une des revendications précédentes, dans laquelle on transforme les données sismiques pour les organiser par angle d'éclairage au moyen d'une transformation de Radon.

**8.** Méthode selon l'une des revendications précédentes, dans laquelle on interprète ladite image en termes lithologiques et/ou pétrophysiques, de façon à surveiller un site de stockage géologique de gaz acides, ou de façon à localiser et évaluer des réservoirs pétroliers.

**9.** Méthode selon l'une des revendications précédentes, dans laquelle on utilise ladite image en complément d'autres diagraphies pour caractériser la zone.

**Patentansprüche**

**1.** Verfahren zum Konstruieren eines Bildes, das für eine Verteilung von akustischen Impedanzen in einer Zone des Untergrunds charakteristisch ist, mittels seismischer Messungen, die gemäß einer Ausgestaltung des Typs "Walkaway" erfasst wurden, die Aussendungen seismischer Wellen von der Oberfläche in den Untergrund und Empfänge durch Empfänger umfassen, die in unterschiedlichen Tiefen in mindestens einem Schacht positioniert sind, und ausgehend von einer Schätzung des Ausbreitungsgeschwindigkeitsfelds seismischer Wellen im Untergrund, **dadurch gekennzeichnet, dass** es die folgenden Schritte umfasst:

- Auswählen von p Ausstrahlungswinkeln, wobei jeder Ausstrahlungswinkel einer Ausbreitungsrichtung einer Wellenfront im Bereich einer oberen Grenze der Zone entspricht;
- Organisieren der seismischen Messungen in Daten $D_p$, die nach Ausstrahlungswinkel p organisiert sind,
- Bestimmen der Verteilung von akustischen Impedanzen innerhalb der Zone mittels einer Inversion, während der ein Abstand zwischen den organisierten Daten $D_p$, die von den seismischen Messungen stammen, und Daten, die von einer Schätzung durch Auflösung einer Ausbreitungsgleichung der Wellen ausgehend von dem Geschwindigkeitsfeld, einer Verteilung akustischer Impedanzen und einer Druckverteilung im Bereich der oberen Grenze der Zone für jeden Ausstrahlungswinkel stammen, minimiert wird.

2. Verfahren nach Anspruch 1, wobei der Abstand unter Berücksichtigung einer A-Priori-Information minimiert wird, die durch eine Einfallsrichtung, die eine Strukturierung der akustischen Impedanzverteilung betrifft, und eine Einfallsrichtung definiert ist, die eine Strukturierung der Druckverteilung betrifft.

3. Verfahren nach Anspruch 2, wobei der Abstand durch Minimieren einer Funktion der kleinsten Quadrate minimiert wird, die einen ersten Term, der den Abstand misst, einen zweiten Term, der einer Richtungsableitung entspricht, die die Strukturierung der akustischen Impedanzverteilung betrifft und mit einem Gewicht $\varepsilon_l$ gewichtet ist, und einen dritten Term umfasst, der einer Richtungsableitung entspricht, die die Struktur der Druckverteilung betrifft und mit einem Gewicht $\varepsilon_{s,p}$ gewichtet ist.

4. Verfahren nach Anspruch 3, wobei die Gewichte durch eine Trial-and-Error-Technik bestimmt werden.

5. Verfahren nach Anspruch 4, wobei die Gewichte durch Anwenden der folgenden Regeln bestimmt werden:

- ein Ergebnis, das zu große korrelierte Residuen zum Vorschein bringt, drückt einen zu hohen Wert von mindestens einem der zwei Typen von Gewichten aus;
- ein Ergebnis, das eine akustische Impedanzverteilung mit abnormal geringen seitlichen Veränderungen zum Vorschein bringt, drückt einen zu hohen dem Gewicht $\varepsilon_l$ beigemessenen Wert aus.

6. Verfahren nach einem der vorhergehenden Ansprüche, wobei der Abstand durch Hinzufügen eines Terms zur Funktion minimiert wird, um eine bestimmte A-Priori-Information im Bereich von mindestens einem durch die Zone gebohrten Schacht zu berücksichtigen, indem eine Einfallsrichtung definiert wird, die eine Strukturierung der Impedanzverteilung betrifft, und indem eine Einfallsrichtung definiert wird, die eine Stukturierung eines Zustands an den Grenzen betrifft.

7. Verfahren nach einem der vorhergehenden Ansprüche, wobei die seismischen Daten umgewandelt werden, um sie mittels einer Radon-Transformation nach Ausstrahlungswinkel zu organisieren.

8. Verfahren nach einem der vorhergehenden Ansprüche, wobei das Bild derart lithologisch und/oder petrophysikalisch interpretiert wird, dass ein geologischer Speicherstandort für Sauergase überwacht wird oder derart, dass Erdölspeicher lokalisiert und bewertet werden.

9. Verfahren nach einem der vorhergehenden Ansprüche, wobei das Bild als Ergänzung anderer Bohrlochuntersuchungen zum Charakterisieren der Zone verwendet wird,

**Claims**

1. A method of constructing an image representative of an acoustic impedance distribution in an area of the subsoil, by means of seismic measurements acquired according to a walkaway type configuration comprising emissions of seismic waves from the surface into the subsoil and receptions by receivers positioned at different depths in at least one well, and from an estimation of the seismic wave propagation velocity field in the subsoil, **characterized in that** it comprises the following stages:

- selecting p illumination angles, each illumination angle corresponding to a direction of propagation of a wave front at the level of an upper limit of said area,

- organizing said seismic measurements into data $D_p$ organized by illumination angle p,
- determining, within said area, said acoustic impedance distribution by means of an inversion, wherein a difference between said organized data $D_p$ obtained from said seismic measurements and data resulting from an estimation is minimized by solving an equation of wave propagation from said velocity field, an acoustic impedance distribution and a pressure distribution at the level of said upper limit of the area for each illumination angle.

2. A method as claimed in claim 1, wherein the difference is minimized by taking into account a priori information defined by a direction of dip concerning a structuration of the acoustic impedance distribution, and a direction of dip concerning a structuration of the pressure distribution.

3. A method as claimed in claim 2, wherein the difference is minimized by minimizing a least-squares functional comprising a first term measuring said difference, a second term corresponding to a directional derivative concerning the structuration of the acoustic impedance distribution and weighted by a weight $\varepsilon_I$, and a third term corresponding to a directional derivative concerning the structuration of the pressure distribution and weighted by a weight $\varepsilon_{B,p}$.

4. A method as claimed in claim 3, wherein said weights are determined by means of a trial-and-error method.

5. A method as claimed in claim 4, wherein the weights are determined by applying the following rules:

   - a result showing too strong correlated residues expresses too strong a value of at least one of the two types of weight,
   - a result showing an acoustic impedance distribution with abnormally weak lateral variations expresses too strong a value assigned to weight $\varepsilon_I$.

6. A method as claimed in any one of the previous claims, wherein the difference is minimized by adding a term to the functional so as to take into account a priori information determined at the level of at least one well drilled through said area, by defining a direction of dip concerning a structuration of the impedance distribution and by defining a direction of dip concerning a structuration of a boundary condition.

7. A method as claimed in any one of the previous claims, wherein the seismic data are converted so as to be organized by illumination angle by means of a Radon transform.

8. A method as claimed in any one of the previous claims, wherein said image is interpreted in lithologic and/or petrophysical terms so as to monitor a geologic acid gas storage site, or to locate and to assess oil reservoirs.

9. A method as claimed in any one of the previous claims, wherein said image is used as a complement to other logs for characterizing the area.

**Fig. 1**

**Fig. 2**

Fig. 3

Fig. 4

**Fig. 5**

**Fig. 6**

Fig. 7

**Fig. 8**

**Fig. 9**

**Fig. 10**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MARI, J.L. ; GLANGEAUD F. ; COPPENS F.** Traitement du signal pour géologues et géophysisciens. 1997
- **DELPRAT-JANNAUD, F ; LALLY, P.** *A fundamental limitation for the reconstruction of of impedance profiles from seismic data,* 2005
- **BOB A. HARDAGE.** Collection Handbook of geophysical exploration. Geophysical Press, 1985

- **KURT J. MARFURT.** Accuracy of finite - difference and finite - element modeling of the scalar and elastic wave equations. *Geophysics,* 1984, vol. 49, 533
- **J. NOCEDAL ; S. J. WRIGHT.** Numerical Optimization. Springer, 1999
- **ROBERT W. CLAYTON ; BJÖRN ENGQUIST.** Absorbing boundary conditions for wave - equation migration. *Geophysics,* 1980, vol. 45, 895